# EUROPÄISCHE PATENTSCHRIFT

(11) **EP 1 754 562 B1**
(45) Veröffentlichungstag und Bekanntmachung des Hinweises auf die Patenterteilung: **21.11.2007**
(21) Anmeldenummer: 05018007.4
(22) Anmeldetag: 19.08.2005
(51) Int. Cl.: B23B 41/12, B23B 29/02

(54) **Vorrichtung zum gleichzeitigen Bohren von mehreren miteinander fluchtenden Bohrungen**
Device for simultaneously drilling a plurality of coaxial holes
Dispositif de forage simultané de plusieurs trous coaxiales

(43) Veröffentlichungstag der Anmeldung: 21.02.2007
(73) Patentinhaber: Cross Hüller GmbH, 71636 Ludwigsburg (DE)
(72) Erfinder: Löser, Hans Ludwig, Dipl.-Ing., 71701 Schwieberdingen (DE); Schlegel, Thomas, Dipl.-Ing., 74366 Kirchheim (DE)
(74) Vertreter: Rau, Manfred

(56) Entgegenhaltungen:
- DE-A1- 10 331 985
- US-B1- 6 293 742

## Beschreibung

Die Erfindung betrifft eine Vorrichtung zum gleichzeitigen Bohren von mehreren miteinander fluchtenden Bohrungen in einem Werkstück mittels mehrerer an einem Bohr-Werkzeug hintereinander angeordneter Schneid-Einsätze nach dem Oberbegriff des Anspruches 1.

Derartige Vorrichtungen werden beispielsweise zum Bohren von Nockenwellen-Bohrungen in Zylinderköpfen oder zum Bohren von Kurbelwellen-Bohrungen in Zylinderblöcken bzw. Motorgehäusen eingesetzt.

Bei einer aus der EP 0 970 770 B1 bekannten Vorrichtung der allgemeinen Gattung ist das Bohr-Werkzeug derartig beidendig in Führungslagern gelagert, dass es in den Lagern seitlich verschoben werden kann, so dass es in ein ortsfestes Werkstück eingefahren werden kann.

Aus der JP 2003 2003-29 A ist eine Vorrichtung der allgemeinen Gattung bekannt, bei der eine Werkstück-Spindel sowohl in einer z-Richtung zum Bohren der Bohrungen im Werkstück als auch vertikal in einer y-Richtung verfahrbar ist, um ein Einfädeln in das Werkstück zu ermöglichen.

Aus der US 6 293 742 B1 ist eine Vorrichtung nach dem Oberbegriff des Anspruches 1 bekannt, bei der das Endstück des Bohr-Werkzeugs auf einem drehbar ausgebildeten Dorn des Gegen-Halters gelagert wird. Eine zuverlässige Lagerung von Bohr-Werkzeugen unterschiedlichen Durchmessers ist hiermit nur bedingt möglich.

Der Erfindung liegt die Aufgabe zugrunde, eine Vorrichtung nach dem Oberbegriff des Anspruches 1 so auszugestalten, dass eine besonders einfache und robuste Gegenlagerung von Böhr-Werkzeugen unterschiedlichen Durchmessers möglich ist.

Diese Aufgabe wird erfindungsgemäß durch die Merkmale des Anspruches 1 gelöst. Durch die erfindungsgemäßen Maßnahmen wird erreicht, dass das Bohr-Werkzeug nur in seiner LängsRichtung, also in z-Richtung, verschiebbar gelagert ist, dass also seine Lagerung besonders stabil ist. Die Relativ-Bewegungen zwischen Bohr-Werkzeug und Werkstück in einer Ebene quer zur Längsrichtung des Bohr-Werkzeugs, also in einer durch die x-Richtung und die y-Richtung aufgespannten Ebene erfolgen ausschließlich durch entsprechende Bewegungen des Werkstücks mittels des x-Fahr-Ständers mit y-Schlitten. Diese Bewegbarkeit des Werkstückes ermöglicht es auch, ohne besondere Zusatzmaßnahmen zwei Bearbeitungs-Stationen mit entsprechenden Bohr-Werkzeugen unmittelbar nebeneinander anzuordnen, so dass gegebenenfalls in einer Aufspannung des Werkstücks nacheinander mit verschiedenen Bohr-Werkzeugen gearbeitet werden kann. Die erfindungsgemäße Ausgestaltung ermöglicht auch eine besonders einfache und robuste Gegenlagerung des Bohr-Werkzeugs und insbesondere den Einsatz unterschiedlicher Bohr-Werkzeuge mit unterschiedlichen Durchmessern,

Die Ansprüche 2 und 3 geben vorteilhafte Ausgestaltungen der Einsatz-Lager-Hülse des Gegen-Halters wieder.

Die erfindungsgemäße Ausgestaltung ermöglicht es auch, das Werkstück an beiden Enden mit äußeren Aufnahmen oder dergleichen zu versehen, wie es in Anspruch 4 niedergelegt ist.

Weitere Merkmale, Vorteile und Einzelheiten der Erfindung ergeben sich aus der nachfolgenden Beschreibung eines Ausführungsbeispiels anhand der Zeichnung. Es zeigt
- Fig. 1: eine Draufsicht auf ein Bearbeitungs-Zentrum nach der Erfindung,
- Fig. 2: eine Längsansicht des Bearbeitungs-Zentrums entsprechend dem Sichtpfeil II in Fig. 1,

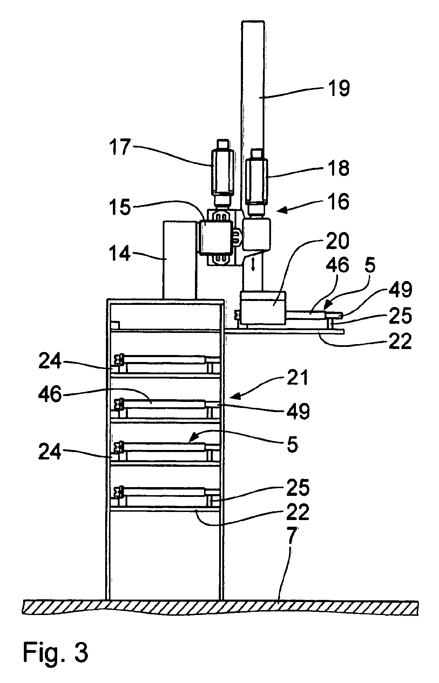

- Fig. 3: eine Seitenansicht eines Werkzeug-Magazins mit einer Beschickungs-Einrichtung gemäß dem Sichtpfeil III in Fig. 1,

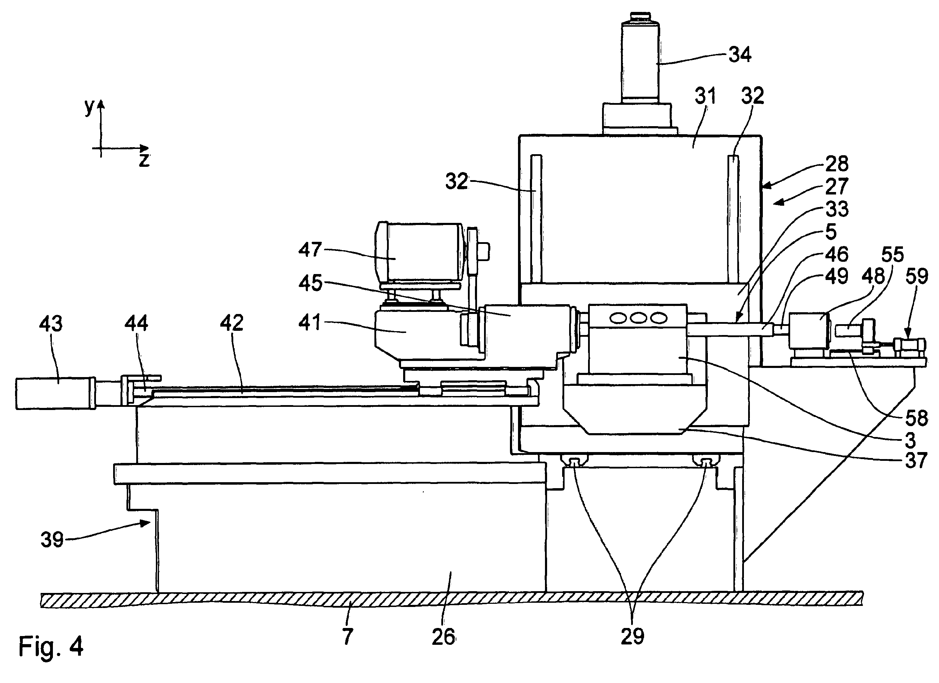

- Fig. 4: eine Seitenansicht des Bearbeitungs-Zentrums entsprechend dem Sichtpfeil IV in Fig. 1 unter Weglassung der Be- und Entlade-Einrichtung und der Beschickungs-Einrichtung,

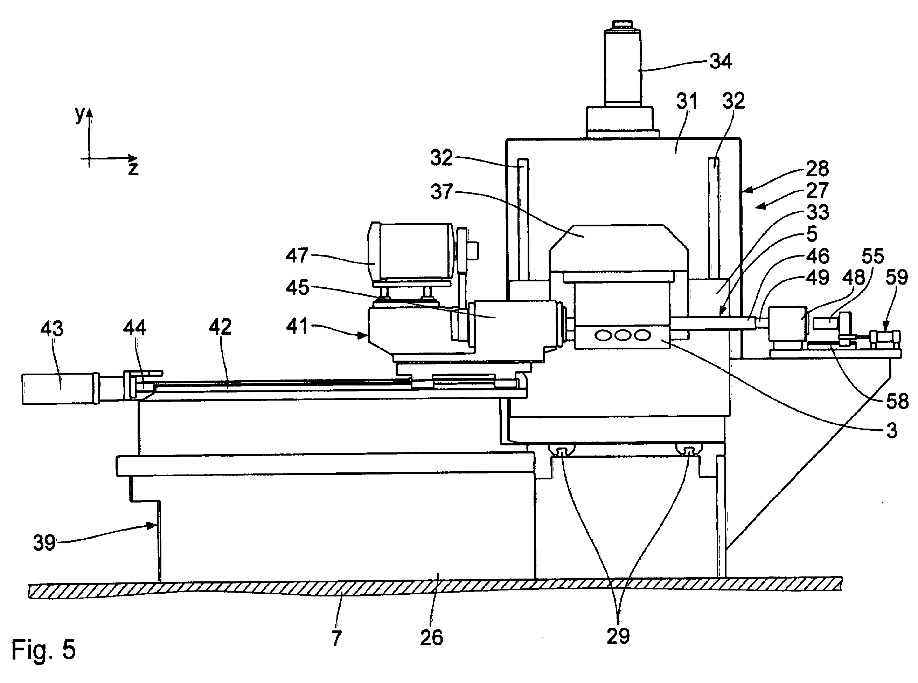

- Fig. 5: eine mit Fig. 4 identische Darstellung, in der lediglich das zu bearbeitende Werkstück um 180° gedreht ist,
- Fig. 6: einen Gegen-Halter für ein Bohr-Werkzeug in einer Ansicht gemäß dem Sichtpfeil VI in Fig. 1,

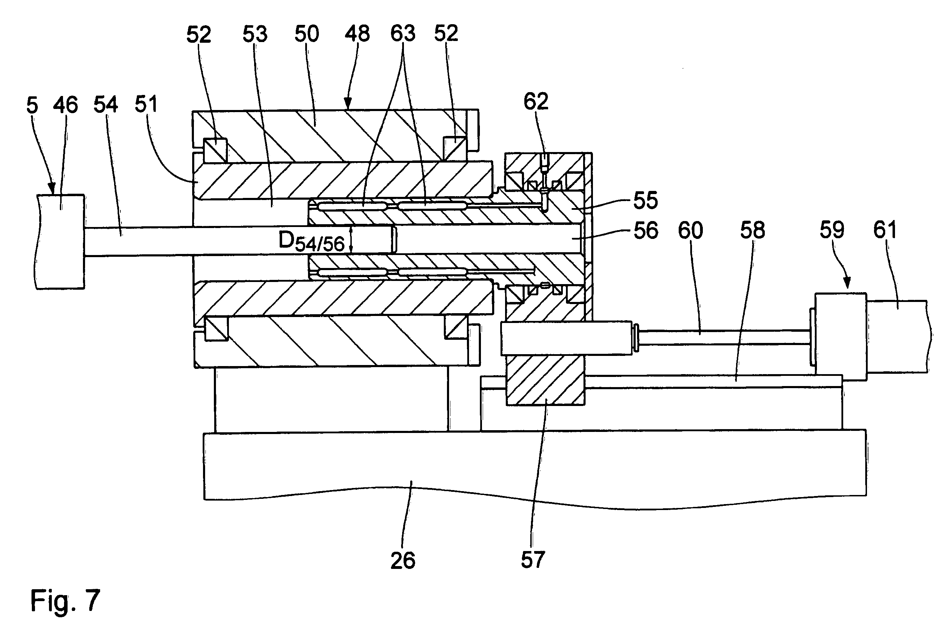

- Fig. 7: eine Fig. 6 entsprechende Darstellung mit einer in den Gegen-Halter eingefahrenen Einsatz-Lager-Hülse, und
- Fig. 8: einen vergrößerten Teilausschnitt aus Fig. 4, der die Bearbeitung eines Werkstücks zeigt.

Das in der Zeichnung dargestellte Bearbeitungs-Zentrum zum Bohren von miteinander fluchtenden Bohrungen weist die eigentliche Vorrichtung 1 zum Bohren solcher Bohrungen auf. Weiterhin weist sie eine Be- und Ent-Lade-Einrichtung 2 zum Zuführen von zu bearbeitenden Werkstücken 3 und eine Beschickungs-Einrichtung 4 zur Zu- und Abfuhr von Bohr-Werkzeugen 5 auf.

Die Be- und Ent-Lade-Einrichtung 2 weist eine über Stützen 6 auf dem Boden 7 abgestützte, oberhalb der Vorrichtung 1 in der Horizontalen verlaufende Transport-Schiene 8 auf; die Stützen 6 und die Transport-Schiene 8 sind also portalartig ausgebildet. Auf der Transport-Schiene 8 ist ein Transport-Wagen 9 in Längsrichtung der Schiene 8 verfahrbar angeordnet, der einen Verfahr-Motor 10 für den Wagen 9 und einen Hub-Motor 11 für die Höhenverstellung eines vertikal verfahrbaren Greif- und Transport-Arms 12 aufweist. Am unteren Ende des Greif- und Transport-Arms 12 ist eine Greif-Einrichtung 13 für jeweils ein Werkstück 3 angebracht.

Die Beschickungs-Einrichtung 4 für die Werkzeuge 5 weist ebenfalls eine über Stützen 14 auf dem Boden 7 angeordnete, horizontal verlaufende Transport-Schiene 15 auf. Die Transport-Schiene 15 verläuft ebenfalls oberhalb der Vorrichtung 1; zusammen mit den Stützen 14 bildet sie ein Portal. Auf der Transport-Schiene 15 ist ein in gleicher Weise wie der Transport-Wagen 9 aufgebauter Beschickungs-Wagen 16 angeordnet, der einen Verfahr-Motor 17 und einen Hub-Motor 18 aufweist. Mit dem Hub-Motor 18 wird ein vertikal im Beschickungs-Wagen 16 gelagerter HubArm 19 in vertikaler Richtung angetrieben. Am unteren Ende des Hub-Arms 19 ist ein Doppel-Greifer 20 angebracht, mit dem gleichzeitig zwei Werkzeuge 5 ergriffen und transportiert werden können.

Unterhalb der Transport-Schiene 15 und neben der Vorrichtung 1 ist ein Werkzeug-Magazin 21 angeordnet, in dem in mehreren Schub-Fächern 22 übereinander jeweils mehrere Bohr-Werkzeuge 5 angeordnet sind, und zwar horizontal und quer zur Längsrichtung der Transport-Schiene 15. Die Schub-Fächer 22 können jeweils aus dem schrank- bzw. regalartigen Werkzeug-Magazin mittels eines Aus- und Einfahr-Antriebs 24 aus dem Magazin 21 unter den Greifer 20 herausgefahren bzw. in das Magazin 21 zurückgefahren werden. Die einzelnen Werkzeuge 5 liegen in jedem Schub-Fach 22 auf Auflagern 25 auf, so dass sie vom Greifer 20 umgriffen werden können.

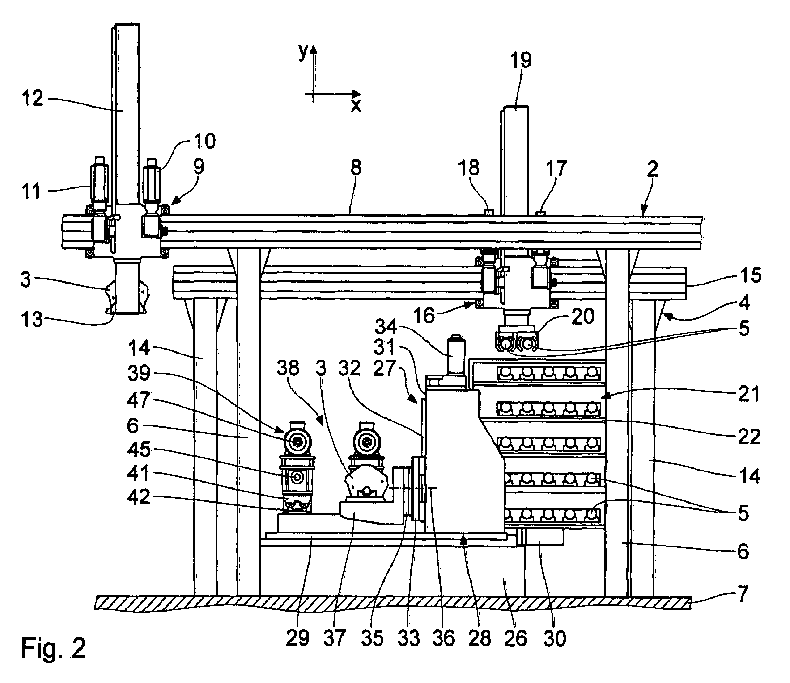

Die Vorrichtung 1 weist ein gegebenenfalls mehrteiliges Maschinenbett 26 auf. Auf diesem ist parallel zur Be- und Entlade-Einrichtung 2 eine Werkstück-Trag-Einrichtung 27 angeordnet. Sie weist einen x-Fahr-Ständer 28 auf, der auf horizontal und parallel zur Transport-Schiene 8 verlaufenden, auf dem Maschinen-Bett 26 angeordneten x-Schienen 29 in x-Richtung verfahrbar ist. Zum Antrieb in x-Richtung ist am Ständer 28 ein x-Antriebs-Motor 30 vorgesehen. An einer vertikalen Stirnseite 31 des Ständers 28 sind vertikal, also senkrecht zur x-Richtung in y-Richtung verlaufende y-Schienen 32 angebracht, auf denen ein y-Schlitten 33 in der Vertikalen verschiebbar gelagert ist. Zum Antrieb dient ein am x-Fahr-Ständer 28 angebrachter y-Antriebs-Motor 34. Am y-Schlitten 33 ist ein Drehteller 35 um eine horizontale zur x-Richtung parallele A-Achse 36 drehbar gelagert, der wiederum einen Werkstück-Halter 37 trägt, der also um diese A-Achse 36 schwenkbar ist. Der Schwenkantrieb des Drehtellers 35 erfolgt mittels eines im x-Fahr-Ständer 28 angeordneten, in der Zeichnung nicht sichtbaren Schwenk-Motors. Die Stirnseite 31 des x-Fahr-Ständers 28 und damit der Werkstück-Halter 37 sind einem Arbeitsraum 38 der Vorrichtung 1 zugewandt, wie insbesondere Fig. 2 entnehmbar ist.

Quer zur x-Richtung und in der Horizontalen erstrecken sich in z-Richtung nebeneinander zwei Bearbeitungs-Stationen 39, 40, die identisch aufgebaut sind und deshalb nur einmal beschrieben werden. Die Bearbeitungs-Stationen 39, 40 erstrecken sich sowohl unter der Beschickungs-Einrichtung 4 als auch unter der Be- und Entlade-Einrichtung 2 hindurch, wie Fig. 2 entnehmbar ist. Sie weisen jeweils einen z-Schlitten 41 auf, der auf z-Schienen 42 in z-Richtung verschiebbar angeordnet ist, die auf dem Maschinen-Bett 26 angebracht sind. Der z-Schlitten 41 wird von einem ortsfesten, am Maschinen-Bett 26 angebrachten z-Antriebs-Motor 43 über eine ortsfeste Spindel 44 in z-Richtung angetrieben. Auf dem z-Schlitten 41 ist jeweils eine Werkzeug-Spindel 45 angebracht, in die eine Bohrstange 46 eines Bohr-Werkzeugs 5 mit einem Ende eingespannt und drehangetrieben werden kann. Die Werkzeug-Spindel 45 wird mittels eines Spindel-Antriebs-Motors 47 angetrieben, der ebenfalls auf dem z-Schlitten 41 angebracht ist. Die Werkzeug-Spindel 45 und damit auch das Werkzeug 5 sind also in x-Richtung und in y-Richtung unverschiebbar geführt.

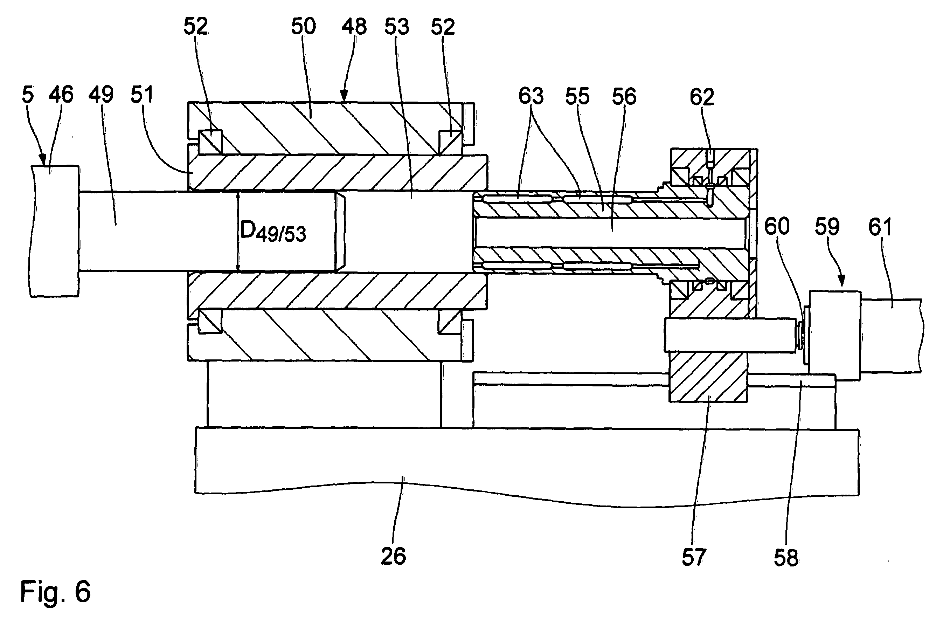

An dem dem z-Antriebs-Motor in z-Richtung entgegengesetzten Ende des Maschinen-Bettes 26, also benachbart zur Be- und Entlade-Einrichtung 2, ist auf dem Maschinen-Bett 26 ein Gegen-Halter 48 für das der Werkzeug-Spindel 45 abgewandte Endstück 49 der Bohrstange 46 angeordnet. Wie Fig. 6 entnehmbar ist, weist der Gegen-Halter 48 ein auf dem Maschinen-Bett 26 abgestütztes Gehäuse 50 auf, in dem eine rohrförmige Lager-Hülse 51 mittels Wälzlagern 52 frei drehbar gelagert ist. In die zylindrische Ausnehmung der Lager-Hülse 51 kann das Endstück 49 der Bohrstange 46 spielfrei eingeschoben und abgestützt werden, so dass die Bohrstange 46 außer in der Werkzeug-Spindel 45 auch im Gegen-Halter 48 gelagert ist. Das in Fig. 6 dargestellte Endstück 49 und die entsprechende Ausnehmung 53 weisen einen Durchmesser D_{49/53} auf, bei dem es sich um einen relativ großen Durchmesser handelt.

Wenn Bohrstangen 46 geringeren Durchmessers mit einem Endstück 54 entsprechend geringeren Durchmessers eingesetzt werden sollen, dann wird in die Lager-Hülse 51 eine Einsatz-Lager-Hülse 55 eingeschoben, die eine dem Endstück 54 angepasste Ausnehmung 56 aufweist. Der Durchmesser D_{54/56} ist also kleiner als der Durchmesser D_{49/53}. Die Einsatz-Lagerhülse 55 ist an einem Hilfs-Schlitten 57 angebracht, der auf Schienen 58 auf dem Maschinen-Bett 26 in z-Richtung abgestützt ist. Er ist mittels eines hydraulisch beaufschlagbaren Kolben-Zylinder-Antriebs 59 verschiebbar, dessen Kolbenstange 60 an dem Hilfs-Schlitten 57 befestigt ist, während der Zylinder 61 dieses Antriebs 59 mit dem Maschinen-Bett 26 verbunden ist. Die Einsatz-Lager-Hülse 55 ist mittels Druckflüssigkeit geringfügig in radialer Richtung aufweitbar bzw. dehnbar, so dass sie in der Lager-Hülse 51 radial verspannt und gegenüber dieser zentriert werden kann. Sie weist hierzu einen Druckflüssigkeits-Anschluss 62 und hiermit verbundene Druck-Dehn-Räume 63 auf. Die Ausnehmungen 53 bzw. 56 sind derartig dimensioniert, dass das jeweilige Endstück 49 bzw. 54 radial spielfrei, aber verschiebbar in der Lager-Hülse 51 bzw. der Einsatz-Lager-Hülse 55 geführt ist. Das Endstück 49 mit der Lager-Hülse 1 bzw. das Endstück 54 mit der Einsatz-Lager-Hülse 55 bilden also eine Art Schiebelager in z-Richtung.

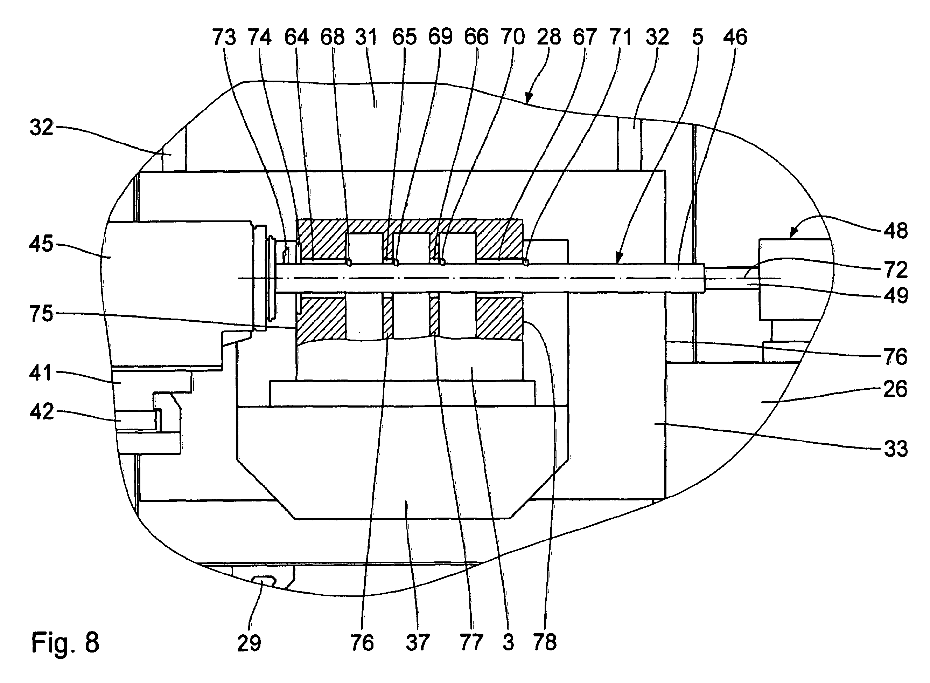

Das in Fig. 8 dargestellte zu bearbeitende Werkstück 3 ist ein Motorgehäuse, in dem mehrere miteinander fluchtende, voneinander beabstandete Bohrungen 64, 65, 66, 67 auf exaktes Endmaß aufgebohrt werden sollen. Die in der Zeichnung dargestellten Bohrungen 64 bis 67 sind die in dem das Werkstück 3 bildenden Gusskörper vorhandenen Roh-Bohrungen. Die Bohrstange 46 des Werkzeugs 5 ist mit vier Schneid-Einsätzen 68, 69, 70, 71 versehen, mittels derer - wie erwähnt - die Bohrungen 64 bis 67 aufgebohrt werden sollen. Für jede Bohrung 64 bis 67 ist nur ein Schneid-Einsatz 68 bis 71 vorhanden, wobei alle Schneid-Einsätze 68 bis 71 in einer gemeinsamen Radial-Ebene durch die Mittel-Längs-Achse 72 der zylindrischen Bohrstange 46 angeordnet sind. Zwischen dem Werkstück 3 und der Werkzeug-Spindel 45 ist ein weiterer Schneid-Einsatz 73 an der Bohrstange 46 eingespannt, mittels dessen eine ringzylindrische Aufnahme 74 in die Außenseite der zugewandten Außenwand 75 des Werkstücks 3 gedreht werden kann. Eine solche Aufnahme 74 dient beispielsweise zur Aufnahme eines Deckels.

Das Werkzeug 5 wird in das Werkstück 3 eingeschoben, wobei die Mittel-Längs-Achse 72 der Bohrstange 46 exzentrisch zu der in der Zeichnung nicht erkennbaren, mit der Achse 72 deckungsgleichen Mittel-Längs-Achse der Bohrungen 64 bis 67 des Werkstücks angeordnet wird. Selbstverständlich muss hierbei der Gesamtdurchmesser der Bohrstange 46 einschließlich der aus ihr herausragenden Schneid-Einsätze 68 bis 71 etwas kleiner sein als der Durchmesser der Roh-Bohrungen 64 bis 67. Das Werkstück 3 wird in diese Position durch entsprechendes Verfahren des x-Fahr-Ständers 28 und des auf ihm befindlichen y-Schlittens 33 verbracht. Das Hindurchschieben des Werkzeugs 5 durch die Bohrungen 64 bis 67 erfolgt dann mittels der auf dem z-Schlitten 41 angebrachten Werkzeug-Spindel 45, in die das Werkzeug 5 bzw. dessen Bohrstange 46 eingespannt ist. Das Werkzeug 5 wird also mit dem freien Endstück 49 durch die in der Außenwand 75 befindliche Bohrung 64, die in inneren Gehäuse-Stegen 76, 77 ausgebildeten Bohrungen 65, 66 und die in der gegenüberliegenden Außenwand 78 ausgebildete Bohrung 67 hindurchgeschoben. Die Werkzeug-Spindel 45 mit dem Werkzeug 5 wird in z-Richtung verschoben, bis das Endstück 49 in die Lager-Hülse 51 des Gegen-Halters 48 eingeführt ist. Nach diesem Einschieben bzw. Einfädeln des Werkzeugs 5 in das Werkstück 3 werden der x-Fahr-Ständer 28 und der y-Schlitten 33 so verfahren, dass die Mittel-Längs-Achse 72 der Bohrstange 46 und die Mittel-Längs-Achse der zu erzeugenden Bohrungen deckungsgleich sind, also miteinander fluchten.

Nunmehr befindet sich das Werkzeug 5 gegenüber dem Werkstück 3 in Arbeitsposition. Im Anschluss daran wird der Spindel-Antriebs-Motor 47 und damit die Bohrstange 46 angetrieben und der z-Schlitten 41 mittels des z-Antriebs-Motors 43 in Richtung des Werkstücks 3 verfahren, so dass die Aufnahme 74 in die Außenwand 75 des Werkstücks 3 geschnitten wird. Fig. 8 zeigt den Zustand nach dem Schneiden dieser Aufnahme 74.

Anschließend wird der z-Antriebs-Motor 43 umgesteuert und das Werkzeug 5 unter Aufbohren der Bohrungen 64 bis 67 durch das Werkstück 3 gezogen. Während der geschilderten Schneid-Vorgänge ist das Endstück 49 bzw. 54 im Gegen-Halter 48 in x- und y-Richtung abgestützt und in z-Richtung verschiebbar geführt. Nach dem Aufbohren der Bohrungen 64 bis 67 auf ihr Endmaß wird das Werkzeug 5 aus dem Werkstück 3 herausgezogen, wozu das Werkstück 3 vorher wieder in eine exzentrische Lage zum Werkzeug 5 verbracht werden kann.

Wenn auf der der Außenwand 75 entgegengesetzten Außenwand 78 des Werkstücks 3 ebenfalls eine der Aufnahme 74 entsprechende Aufnahme geschnitten werden soll, dann wird der Drehteller 35 mit dem Werkstück-Halter 37 und dem Werkstück 3 um 180° um die A-Achse 36 gedreht. Anschließend wird die Bohrstange 46 mit den Schneid-Einsätzen 68 bis 71 wieder in der geschilderten Art in das Werkstück 3 eingefädelt. Danach werden die Mittel-Längs-Achse 72 der Bohrstange und die Mittel-Längs-Achse der Bohrungen 64 bis 67 in der geschilderten Weise wieder fluchtend ausgerichtet. Danach wird eine der Aufnahme 74 entsprechende Aufnahme in die Außenwand 78 gedreht.

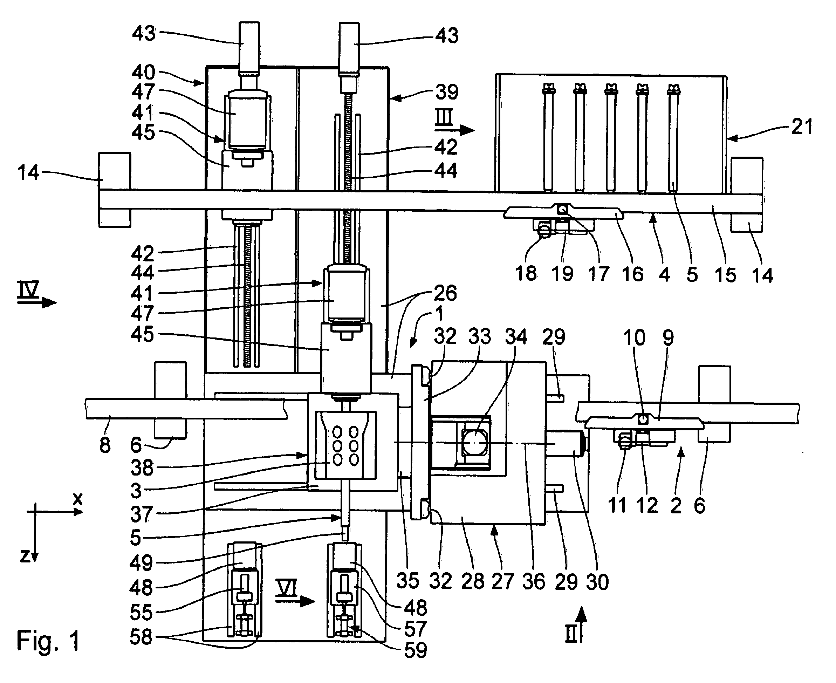

Wenn nacheinander unterschiedliche Bohrungen mit unterschiedlichen Werkzeugen in einem Werkstück 3 gebohrt werden sollen, dann erfolgt dies nacheinander an ein und demselben Werkstück 3 auf den beiden benachbarten Bearbeitungs-Stationen 39, 40, von denen also immer nur eine im Einsatz ist. Damit dies möglich ist, können beide Bearbeitungs-Stationen 39, 40 vom x-Fahr-Ständer 28 überfahren werden, wie Fig. 1 erkennen lässt.

Die Zu- und Abführung der Werkstücke 3 zum Werkstück-Halter 37 erfolgt mittels der Be- und Endlade-Einrichtung 2. Die Werkzeuge 5 werden mittels der Beschickungs-Einrichtung 4 vom Werkzeug-Magazin 21 zu den beiden Werkzeug-Spindeln 45 und von diesen zurück transportiert. Damit ein Werkzeug-Wechsel auf beiden Bearbeitungs-Stationen 39, 40 zügig durchgeführt werden kann, ist der Greifer 20 als Doppel-Greifer ausgebildet.

## Patentansprüche

1. Vorrichtung zum gleichzeitigen Bohren von mehreren miteinander fluchtenden Bohrungen (64 bis 67) in einem Werkstück (3) mittels mehrerer an einem Bohr-Werkzeug (5) hintereinander angeordneter Schneid-Einsätze (68 bis 71),
- mit einem Maschinen-Bett (26),
- mit einem auf dem Maschinen-Bett (26) in einer x-Richtung verschiebbar angeordneten x-Fahr-Ständer (28),
- mit einem am x-Fahr-Ständer (28) in einer senkrecht zur x-Richtung verlaufenden y-Richtung verschiebbar angeordneten y-Schlitten (33),
- mit einem am y-Schlitten (33) angeordneten Werkstück-Halter (37) und
- mit mindestens einer Bearbeitungs-Station (39, 40), die
-- eine nur in einer zur x-Richtung und zur y-Richtung senkrechten z-Richtung verfahrbare, drehantreibbare Werkzeug-Spindel (45) zur drehfesten und in x-Richtung und y-Richtung unverschiebbaren Aufnahme des Bohr-Werkzeugs (5) und
-- einen Gegen-Halter (48) zur in x-Richtung und y-Richtung festen, in z-Richtung verschiebbaren Aufnahme eines Endstücks (49, 54) des Bohr-Werkzeugs (5) aufweist,
**dadurch gekennzeichnet,**
**dass** der Gegen-Halter (48) zusammen mit dem Endstück (49, 54) nach Art eines Schiebe-Lagers in z-Richtung ausgestaltet ist,
**dass** der Gegen-Halter (48) eine drehbar gelagerte Lager-Hülse (51) mit einer zylindrischen Ausnehmung (53) zur Aufnahme des Endstücks (49, 54) aufweist, und
**dass** eine in die Ausnehmung (53) der Lager-Hülse (51) einschiebbare Einsatz-Lager-Hülse (55) vorgesehen ist, die eine Ausnehmung (56) geringeren Durchmessers aufweist als die Lager-Hülse (51).

2. Vorrichtung nach Anspruch 1, **dadurch gekennzeichnet,**
**dass** die Einsatz-Lager-Hülse (55) in der Lager-Hülse (51) festklemmbar ausgebildet ist.

3. Vorrichtung nach Anspruch 1, **dadurch gekennzeichnet,**
**dass** die Einsatz-Lager-Hülse (55) an einem in z-Richtung verschiebbaren Hilfs-Schlitten (57) angebracht ist.

4. Vorrichtung nach einem der Ansprüche 1 bis 3, **dadurch gekennzeichnet,**
**dass** der Werkstück-Halter (37) um eine zur x-Richtung parallele A-Achse (36) schwenkbar am y-Schlitten (33) gelagert ist.

## Claims

1. Device for simultaneous drilling of several aligned holes (64 to 67) into a work piece (3) by means of several cutting inserts (68 to 71) which are arranged in a row along a drilling tool (5),
- with a machine bed (26),
- with a mobile x-column (28) which is arranged on the machine bed (26) and is displaceable in an x-direction,
- with a y-slide (33) which is arranged on the mobile x-column (28) and is displaceable in a y-direction that is perpendicular to the x-direction,
- with a work piece carrier (37) arranged on the y-slide (33) and
- with at least one machining station (39, 40) which
-- is provided with a rotatably driven work piece spindle (45) which is only displaceable in a z-direction that is perpendicular to the x-direction and to the y-direction to accommodate the drilling tool (5) in a rotationally fixed manner whilst preventing a movement of the drilling tool (5) in x-direction and y-direction, and
-- a counter holder (48) to accommodate an end piece (49, 54) of the drilling tool (5) which is held firmly in place in x-direction and y-direction but is displaceable in z-direction,
**characterized in**
**that** the counter holder (48), together with the end piece (49, 54), is formed like a slide bearing in z-direction,
**that** the counter holder (48) is provided with a rotatably mounted bearing sleeve (51) with a cylindrical recess (53) to accommodate the end piece (49, 54), and
**that** an insertable bearing sleeve (55) is provided which is insertable into the recess (53) of the bearing sleeve (51), and which is provided with a recess (56) whose diameter is smaller than that of the bearing sleeve (51).

2. Device according to claim 1, **characterized in that** the insertable bearing sleeve (55) is clampable inside the bearing sleeve (51).

3. Device according to claim 1, **characterized in that** the insertable bearing sleeve (55) is attached to an auxiliary slide (57) which is displaceable in z-direction.

4. Device according to any one of claims 1 to 3, **characterized in that** the work piece carrier (37) is mounted pivotably on the y-slide (33) about an A-axis which is parallel to the x-direction.

## Revendications

1. Dispositif de forage simultané de plusieurs trous (64 à 67) coaxiales, dans une pièce à usiner (3), à l'aide de plusieurs dispositifs de coupe (68 à 71) alignés les uns derrière les autres sur un outil de perçage (5),
- avec un banc de machine (26),
- avec un poste de conduite x (28) coulissant dans une direction x, disposé sur le banc de machine (26),
- avec un chariot y (33) coulissant dans une direction y, perpendiculaire à la direction x, disposé sur le poste de conduite x (28),
- avec un porte pièce (37) placé sur le chariot y (33) et
- avec au moins une station de traitement (39, 40), qui présente
-- un arbre à outil (45), dirigeable et rotatif seulement dans une direction Z, perpendiculaire à la direction x et à la direction y, pour une fixation anti-rotation et non déplaçable dans le sens x et dans le sens y, de l'outil de perçage (5) et
-- un bras conducteur (48) pour une fixation, ferme dans le sens x et dans le sens y, coulissante dans le sens z, d'un embout (49, 54) de l'outil de perçage (5),
**caractérisé en ce que**
le bras conducteur (48), avec l'embout (49, 54) est conçu comme un support à coulisse dans la direction z,
**en ce que** le bras conducteur (48) présente un coussinet (51) rotatif, avec une entaille cylindrique (53) pour l'admission de l'embout (49, 54), et
**en ce que** un coussinet d'insertion (55) s'introduisant dans l'entaille (53) du coussinet (51), est prévu, présentant lui-même une entaille (56) de diamètre inférieur à celui du coussinet (51).

2. Dispositif selon la revendication 1, **caractérisé en ce que** le coussinet d'insertion (55) est conçu de façon à pouvoir être coincé dans le coussinet (51).

3. Dispositif selon la revendication 1, **caractérisé en ce que** le coussinet d'insertion (55) est placé sur un chariot auxiliaire (57) coulissant dans la direction z.

4. Dispositif selon les revendications 1 à 3, **caractérisé en ce que** le porte pièce (37) est disposé sur le chariot y de façon orientable, selon un axe A parallèle à la direction x.
